# EUROPEAN PATENT SPECIFICATION

(11) **EP 1 634 128 B1**
(45) Date of publication and mention of the grant of the patent: **20.10.2010**
(21) Application number: 04730238.5
(22) Date of filing: 29.04.2004
(51) Int. Cl.: G04G 21/02

(54) **METHOD FOR COMPENSATING DISTURBANCES DUE TO A PLURALITY OF STEP MOTORS IN AN ELECTRONIC COMPASS**
VERFAHREN ZUM KOMPENSIEREN VON STÖRUNGEN IN EINEM ELEKTRONISCHEN KOMPASS, DIE AUF EINE VIELZAHL SCHRITTMOTOREN ZÜRUCKZUFÜHREN SIND
PROCEDE DE COMPENSATION DE PERTURBATIONS DUES A UNE PLURALITÉ DE MOTEURS PAS-A-PAS DANS UNE MONTRE-BOUSSOLE ELECTRONIQUE

(30) Priority: 29.05.2003 US 474165 P; 16.12.2003 US 737387
(43) Date of publication of application: 15.03.2006
(73) Proprietor: Timex Group B.V., 1075 AD Amsterdam (NL)
(72) Inventor: STOTZ, Gerhard, Eisingen 75239 (DE)
(74) Representative: Perkins, Sarah
(86) International application number: PCT/EP2004/004556
(87) International publication number: WO 2004/107061

(56) References cited:
- EP-A- 1 024 345
- EP-A- 1 178 284
- WO-A-01/91978
- CH-A- 690 697
- FR-A- 2 438 861
- US-A- 5 596 551
- PATENT ABSTRACTS OF JAPAN vol. 1998, no. 11, 30 September 1998 (1998-09-30) & JP 10 170664 A (SEIKO EPSON CORP), 26 June 1998 (1998-06-26)

## Description

### BACKGROUND OF THE INVENTION

The present invention is generally directed to electronic devices that produce or encounter predictable and/or internally generated signals, and in particular, to an improved method of more accurately compensating for such predictable and/or internally generated signals. Specifically, by way of example, the present invention is directed to electronic devices that include a "compass mode" in which the device can receive and display directional headings. More specifically, the present invention is directed to a method of more accurately determining directional headings in such an electronic device such as a timepiece, and a watch in particular, that includes one or more stepper motors, such as a Lavet stepping motor, which have the capability to produce magnetic fields which, if not accurately compensated for while the electronic device is in the "compass mode", can significant affect the directional heading readings.

Typically, "all digital" watches do not include any internally generated electromagnetic (i.e. electric and/or magnetic) fields. For example, such watches typically do not include any stepper motors, and use only LCD displays for the display of all information, including the "time of day" ("TOD"). More specifically, those "all digital" watches that do include a compass mode can obtain fairly accurate directional heading readings because there is typically no internally changing magnetic fields, such as those created by the rotors of such stepper motor being in different orientations, to interfere with such readings.

However, not all consumers prefer such "all digital" watches, and instead, prefer watches with some amount of analog display functionality, i.e. watches which tell time or other information using hands. In watches that drive such hands by the use of stepper motors, attention needs to be made to the magnetic fields caused by the rotor which may adversely affect the directional heading readings, since practically speaking, the duration of the time period during which directional heading readings are obtained will include the period where the rotor would typically passes through both orientations (e.g. 180° apart).

Therefore, in watches that are ""all analog" or which may include functions of both an analog watch and digital watch, such as the "combo" watch, an example of which is described in U.S. Patent No. 5,691,962, it is desirable to take into account the orientation of the rotor when taking directional heading readings.

In the marketplace, there is at least one watch that includes both hands for telling time (i.e. an analog watch) and a compass mode, such watch being marketed and sold under the brand name Tissot T-Touch. Contrary to the construction provided in the instant application, the Tissot T-Touch uses the hour and minute hand to indicate the direction. That is, during the normal time telling mode, the Tissot T-Touch tells time in the traditional manner (i.e. with its hour and minute hands). However, upon the activation of the compass mode, the hour and minute hand become aligned to act as a compass direction indicator (i.e. pointing North). Whether or not the internal methodology in the Tissot T-Touch takes into account the possibility of changing magnetic fields created in the watch during directional heading readings (i.e. it is noted that the rotor must be rotating to permit the hands to continually rotate) so as to provide for increased accuracy in its directional heading readings, it will become quite apparent that the present invention is directed to a starkly different methodology.

Thus, it has been recognized that advances in the methodology to compensate for predictable and/or internally generated signals in electronic devices are desired. Specifically, by way of example, it is desired to provide an improved methodology for compensating for the magnetic fields created by the one or more rotors of a stepper motor in an electronic device. In particular, it is desirable to provide an improved method of more accurately determining directional headings in an electronic device that includes a sensor for taking such readings, such as a timepiece, and a watch in particular, that includes one or more stepper motors. The present invention overcomes the perceived deficiencies in the prior art as well as achieves the foregoing and below mentioned objectives.

In EP 1024345 an electronic wristwatch is described which includes an azimuth sensor. The wristwatch has a single stepping motor for controlling the motion of the time display hands of the watch. The wristwatch also includes a memory in which is stored data relating to offset values based on rotor leakage. This data is used to correct errors in the azimuth measurements arising from the fluctuating magnetic field of the stepping motor. A similar device is also described in JP 10170664.

### SUMMARY AND OBJECTS OF THE INVENTION

It is therefore an object of the present invention to provide a method for compensating for predictable and/or internally generated signals in electronic devices.

It is another object and advantage of the present invention to provide an improved methodology for compensating for the magnetic fields created by the two or more rotors of a stepper motor in an electronic device.

It is yet another object of the present invention to provide an improved method of more accurately determining directional headings in an electronic device such as a timepiece, and a watch in particular, that includes two or more stepper motors and which includes a "compass mode" that takes and displays such directional headings.

Another object and advantage of the present invention is to provide an electronic device that can more accurately take such directional heading readings and display them to a user, such as on an LCD display.

Still another object and advantage of the present invention is to provide and display such directional heading readings while continuously maintaining and displaying at least essentially accurate timekeeping information.

Still other objects and advantages of the invention will in part be obvious and will in part be apparent from the specification.

The invention is in accordance with claims 1 and 7 and the features of construction, combination of elements and arrangement of parts and sequence of steps will be exemplified in the construction, illustration and description hereinafter set forth.

Generally speaking, the invention is directed to a method, in an electronic device, of measuring an external field and displaying indicia related to the measurement, wherein the electronic device generates a first internal field and at least a second internal field, wherein the method comprises the steps of measuring the external field when the electronic device is generating the first internal field; and only displaying indicia related to measurements taken while the electronic device is generating the first internal field, although when the displaying occurs is not limited (i.e. the digital display of the directional headings may be continuous, i.e. through the time when the second internal field is generated). In the preferred embodiment, the first internal field is generated by the rotors of the stepping motors being in a first orientation, and the at least second internal field is generated by the rotors of the stepping motors being in a second orientation, wherein the method comprises the steps of determining whether the rotors are in the first orientation before measuring the external field; and if not, causing the rotors to rotate into the first orientation prior to measuring the external field.

### BRIEF DESCRIPTION OF THE DRAWINGS

For a fuller understanding of the invention, reference is had to the following description taken in connection with the accompanying figures, in which:
Figs. 1 and 2 are exploded views of the dial side and movement side, respectively, of the construction of a preferred electronic device that incorporates the present invention; and
Fig. 3 is a flow chart of a preferred method of more accurately taking directional heading readings in an electronic device, such as a time piece in general and a watch in particular, that includes one or more stepper motors.

### DETAILED DESCRIPTON OF THE PREFERRED EMBODIMENTS

While the present invention is generally directed to electronic devices that produce or encounter predictable and/or internally generated signals, the present invention is particularly directed to an improved method of more accurately compensating for such predictable and/or internally generated signals in an electronic device, such as a timepiece and a watch in particular. More specifically, the present invention is directed to electronic devices that include a "compass mode" in which the device can receive and display directional headings via a sensor coupled to the device (either internally or externally), and a method of more accurately determining such directional headings in timepieces that include two or more stepper motors. Specifically, as will become apparent below, in such timepieces, the rotor orientations produce differing magnetic fields, and, if not accurately compensated for while the electronic device is in the "compass mode", can significantly affect the directional heading readings.

Even more specifically, the present invention is directed to electronic devices of the previous paragraph that includes a compass mode as defined above. Generally speaking, such compass modes are well known and have been incorporated into the aforementioned "all digital" timepieces, such as those manufactured and sold by the assignee of the present invention under the Timex and Expedition brand names. Accordingly, it should be understood that compass ASICs (hereinafter "ASIC" or "ASICs") to perform such directional heading readings are well known in the industry, and the particular construction thereof is not material to the invention.

Furthermore, although one skilled in the art will readily appreciate that the present invention is applicable to electronic devices with a plurality of stepping motors, the electronic device described below comprises only one stepper motor, which steps the second hand as will be disclosed herein. Accordingly, reference to "the rotor" and/or "the stepper motor" should be understood to be the rotor and/or the motor for driving the gear train for rotating the second hand, if available, and thus the minute and hour hand, in a known manner. However, the present invention, in its broadest application, should not be limited thereby.

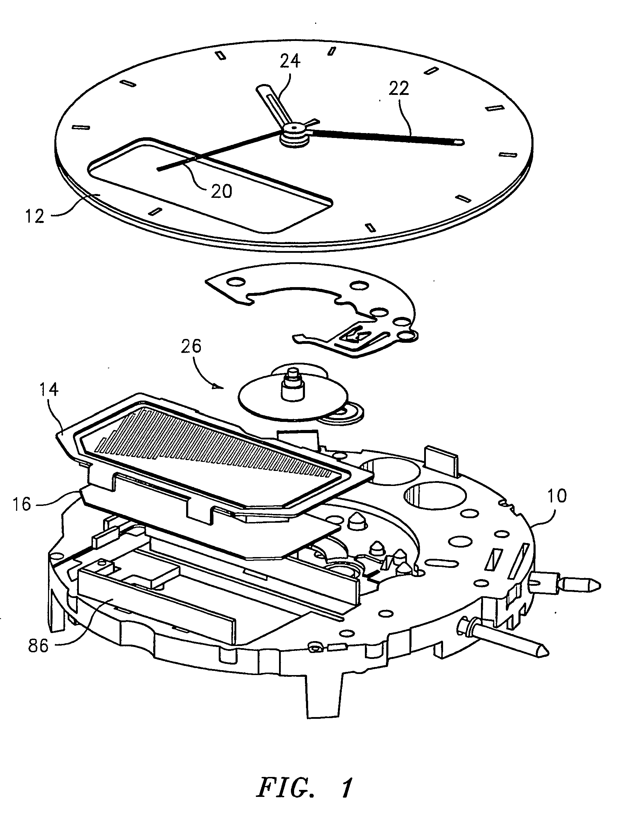

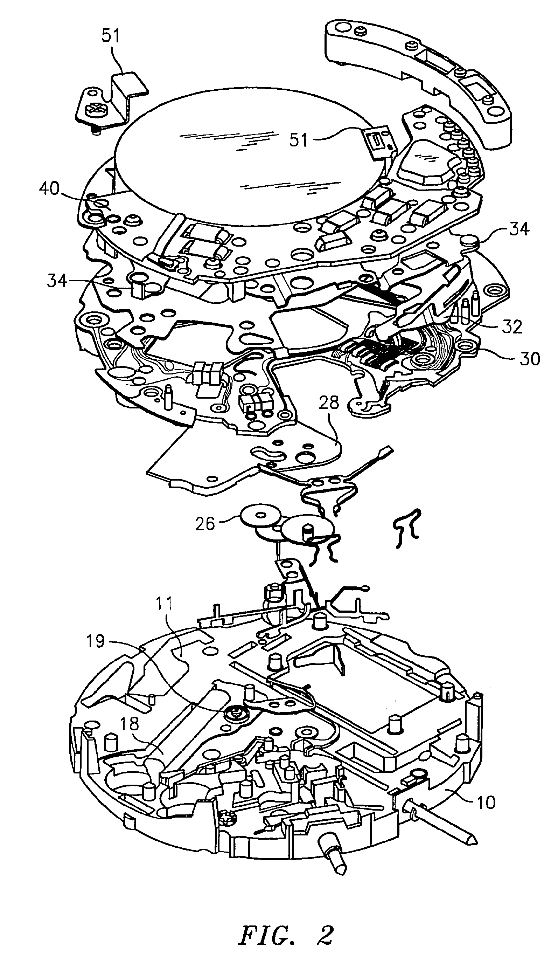

Reference is thus briefly made to Figs. 1 and 2 for a disclosure of the preferred embodiment that incorporates the methodology of the present invention, although further details of the construction of Figs. 1 and 2 are more particularly set forth in U.S. Patent No. 7406003 (application Serial No. 60/474,180).

Specifically, Figs. 1 and 2 illustrate a module, generally indicated at 1. Module 1 is part of a timepiece and a watch in particular, the straps and casing of which is not shown here for purposes of brevity, but which is shown in the aforementioned US Patent No. 7406003. However, reference may be made herein to a timepiece and/or watch, and is intended to mean the device that includes module 1.

Module 1 includes one stepper motor, generally indicated at 18, which itself includes a rotor 19. Rotor 19 drives a gear train, generally indicated at 26, which in turn rotates second hand 20, which in turn causes the rotation of the minute hand and hour hand, all of which should be well understood by one skilled in the art.

Moreover, the rotation of rotor 19 of stepper motor 18 is under microprocessor control, all of which should also be well known to one skilled in the art. For reference, one may wish to review copending and coowned US Patent Nos. 6731093 or 7113450 (U.S. Application Serial Nos. 10/090,588 or 10/441,417 respectively), for a complete understanding of controlling and driving one or more stepper motors.

As should now be appreciated from the foregoing, the magnetic fields created by the rotor 19 being in one of at least two orientations (typically, in a Lavet type stepping motor that makes two (2) steps per 360°, the rotor will be orientated in one of two positions, each being 180° out of phase with the other) can adversely affect directional heading readings taken by the compass ASIC, which in turn will adversely affect the accuracy of the displayed directional headings in an analog timepiece or other electronic device that includes a compass mode. In the preferred embodiment, the display of the directional headings is provided on an LCD display 14 (Fig. 1). The compass ASIC is mounted on printed circuit board 40.

Accordingly, for use in such electronic devices that include a compass mode and one or more of such stepper motors, the present invention is directed to a method of ensuring that such directional heading readings are performed while the rotor is in a specific (and always the same) orientation. In this way, once the magnetic field created by the rotor is taken into account during a calibration mode, each successive actuation of the compass mode will be able to provide for accurate directional heading readings, since the magnetic field of the rotor will be of a known quantity and direction, thus being able to be always and accurately offset from the actual directional heading readings.

Therefore, whenever directional headings are to be taken by the ASIC, it is desirable that the rotor always be in the same position as it was when calibration was performed. Moreover, while possible, it is *not desirable* to delay (i.e. for one second, for example) the directional heading readings until the rotor rotates in the position for which calibration was made, nor is it desirable to take and display directional heading readings only over a very short duration, i.e. less than a second (e.g. a "single-shot" compass reading). On the contrary, what is desirable, and achieved by the present invention, is the ability to both take and display current directional heading readings as soon as possible after the user requests such directional heading information, and therafter, for an extended period, continue to take and display such directional heading readings. For example, in a preferred method, the extended period during which directional headings are taken and displayed, may be fifteen (15) seconds, although, as will become clear below, this is by example and not limitation, as the duration is only a matter of design choice, since the preferred methodology of the present invention is not dependent thereon.

Specifically, after the first heading is taken, and the data is sent to the processing and display software, this processing software sets a timer for a predetermined length of time (e.g. 1 second). When this timer expires, the software then requests that another sample be taken by setting a flag, and activating the interrupt which is used to read the compass ASIC. This would then re-activate the compass sampling software which would read the ASIC and clear the flag to indicate data was read. This sequence allows samples to be processed and displayed at a 1Hz rate for as long as there flag is reset (in this case 15 seconds). However, if a faster update was desired, the processing and display software could set the timer for a shorter duration (e.g. 0.5 seconds), and set the flag when this shorter timer expires. In this case, the update rate would be 2Hz. By this method, the compass data can be sampled and the display updated at any desired rate.

Generally speaking, the present invention is achieved by, among other things, ensuring that the microcontroller "knows" the orientation of the rotor. Firstly, using the convention discussed in the next paragraph, calibration is effected by arbitrarily designating one orientation of the rotor motion as the "good" orientation. Moreover, the way the microcontroller "knows" the orientation of the rotor is by the signal the microcontroller sends to make the rotor rotate. There are two sets of signals that drive the rotor, one signal set drives the motor from "bad-to-good", and another drives it from "good-to-bad". If successive "good-to-bad" signals are sent after a preceding first "good-to-bad" signal, the rotor will not rotate anymore. Conversely, successive "bad-to-good" signals after a preceding first "bad-to-good" signal will also produce no further rotor movement. Thus, the microcontroller has to keep track of what signal it has just sent to make the rotor move so it can send the correct next signal.

Moreover, the microcontroller must maintain the orientation of the rotor both when the electronic device first enters the compass mode, and while in the compass mode. Briefly stated, the following convention will be used. Namely, if the rotor is in the orientation for which the magnetic field was taken into account during calibration, this rotor orientation will be coined the "good" orientation. On the other hand, if the rotor is in the opposite orientation, such orientation will be coined the "bad" orientation. Preferably, directional heading readings are only taken when the rotor is in the "good" orientation. Since there is always the likelihood that the compass mode will be entered when the rotor is in the "bad" orientation (and of course, each second the rotor of the stepper motor will rotate into the "bad" orientation), some methodology needs to be provided, and is provided herein, to continually "force" the rotor ahead to the "good" orientation where the aforementioned accurate directional heading readings can be taken. Of course, all this needs to be performed under the strict control of the microprocessor since the analog time must be accurately maintained, notwithstanding the fact that the rotor may be "forced" ahead while in the compass mode.

Thus, in accordance with the preferred embodiment, where "continuous" directional heading readings are taken (i.e., the ASIC is read at a relatively high rate on a sampled basis to simulate continuous operation), when the rotor rotates into the "bad" orientation (i.e. the position where it is not desirable to perform directional headings readings), the rotor will be "forced" 180° ahead to the "good" orientation (i.e. the position where it is desirable to perform directional headings readings). When the compass reading is completed, the microprocessor will determine whether the display of the analog time is ahead of the actual time, and if so, will delay the rotation of the rotor as set forth below. In this way, the accuracy of the analog display of time can be maintained.

In a particular embodiment where a digital display is provided such as in the present "combo" watch embodiment of Figs. 1 and 2, it should be understood that the digital TOD will always be accurate (i.e. entering or being in the compass mode having no affect on any digital display of TOD).

Thus, what a user will see while the device is in the compass mode, as will become clearer below, is the second hand of the analog display moving in two second increments, i.e. moving two positions every other second, and not moving at all on the seconds between the two second increments.

While not necessarily material to enabling the present invention, the following is provided to alert the ordinarily skilled artisan of typical constraints that may be encountered when implementing the present invention in an electronic device, such as a watch.

Specifically, it is assumed that the rotor driving the second hand is uni-directional, and thus can only be advanced. Secondly, the rotor can only move one position per 31.25ms, meaning the rotor cannot be advanced any faster than 32 steps per second, i.e., 16 revolutions per second. Thirdly, the ASIC is activated by the microprocessor, samples the magnetic field, and transmits this sample (data) to the microprocessor only when the rotor is at rest.

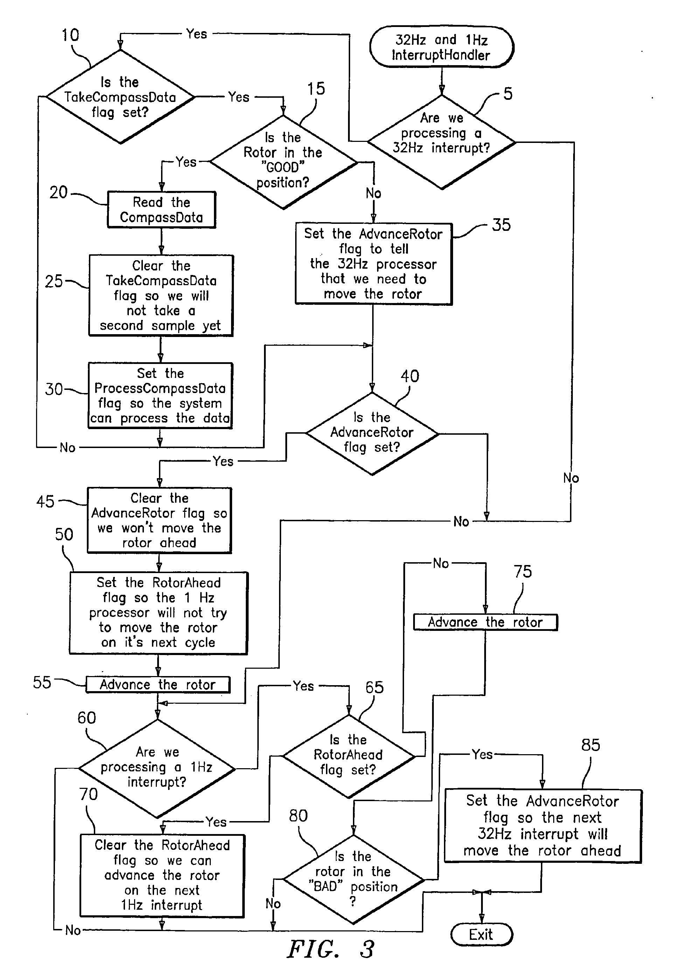

The rotor will be advanced using only the 1Hz or 32Hz interrupt (see Fig. 3). If both interrupts occur simultaneously, only one rotor advancement will be allowed, and the ASIC will be read only on the 32Hz interrupt when the motor is in the "good" orientation. The ASIC will be read only in the Interrupt Service Routine of Fig. 3, as this takes only 10-15 msecs, and it is preferable that the ASIC is read as soon as the rotor is in the correct (i.e. "good") orientation.

The preferred methodology requires that certain variables are tracked, and they are appropriate labeled in Fig. 3. Such variables, as will become clear below, assist in tracking the orientation of the rotor, the accuracy of the analog time (e.g. was the rotor prematurely advanced to place it in the "good" orientation thus making the analog TOD ahead of the "true accurate time" and/or that which is correspondingly displayed on the LCD), whether and when the rotor needs to be rotated ahead 180°, and whether data is needed from the ASIC. For example:

| | | |
|---|---|---|
| 1. | "TakeCompassData" flag | Setting this flag instructs the microcontroller to retrieve a directional heading reading from the ASIC during a 32Hz Interrupt. If this flag is cleared, the ASIC is not read. This flag may be set by the application to start sampling or during the reading of the ASIC routine in continuous mode when the correct time slot has been reached to sample the ASIC. |
| | | |
| 2. | "AdvanceRotor" flag | If this flag is set, the rotor *must be* advanced 180° during a 32Hz Interrupt and before the ASIC is read. |
| | | |
| 3. | "RotorAhead" flag | This flag being set indicates that analog TOD time is ahead of the actual time by one second. The flag is set whenever the rotor is advanced during the 32 Hz Interrupt portion of Fig. 3. |

All compass reading and motor movements occur in the Interrupt Routine of Fig. 3.

Reference is now made to Fig. 3, which illustrates the preferred methodology to carry out and achieve the aforementioned objectives.

At the beginning of the Interrupt Routine, control of the microprocessor passes to step 5, where it is determined whether a 32Hz Interrupt is being processed. If it is not (i.e. the compass mode has not been actuated) it is determined whether it is time to advance second hand 20.

Assuming that the compass mode has been actuated, control passes to step 10, where it is determined whether the TakeCompassData flag is set. If it is set, a directional heading is to be read from the ASIC if the rotor is in the "good" orientation. Hence, control passes to step 15 where it is determined whether the rotor is in the "good" position.

If the rotor is in the "good" position, control passes to steps 20-30, where the directional heading from the ASIC is read (step 20), the TakeCompassData flag is cleared (step 25) so as to ensure that only one directional heading is taken, and the data retrieved from the ASIC is processed (step 30). If the flag wasn't cleared, every time the 32Hz Interrupt was entered, a direction heading would be taken, whether one was desired or not.

In the preferred embodiment, the headings are displayed instantaneously since the sampling rate is low (once a second for headings).

On the other hand, if it is determined at step 15 that the rotor is in the "bad" orientation, control passes to step 35 wherein the AdvanceRotor flag is set so that the microprocessor knows that the rotor must be advanced 180° before data is read from the ASIC.

From step 30 or step 35, control passes to steps 40 where it is determined if the AdvanceRotor flag has been set. If it is set (i.e. the rotor must be advanced), control passes to steps 45-55 wherein the Advanced Rotor flag is then cleared so that the rotor is not thereafter advanced again (step 45), the RotorAhead flag is set so that the microprocessor will not attempt to rotate the rotor on its next cycle (step 50) and the rotor is advanced to the "good" orientation (step 55).

If it were determined at step 40 that the AdvanceRotor flag was not set, control would immediately pass to step 60. For completeness, it can be seen that control also passes to step 60 after the rotor was advanced in step 55.

At step 60 it is determined whether the 1Hz Interrupt is being processed where if appropriate, the second hand would be rotating in its normal TOD mode. If not, control passes to the end of the Interrupt Service Routine and back to the main processing software (i.e., the watch's operating system, or core software).

At step 60, it is determined if one second has elapsed and if the Time of Day must be interrupted. At this point, if a 1Hz Interrupt is being processed, the digital TOD would be updated. Therefore, if it is determined at step 60 that the rotor needs to be advanced, control passes to step 65 wherein it is determined whether the RotorAhead flag has been set thus indicating that the analog time is ahead of the correct time by one second. If the RotorAhead flag is set, control passes to step 70 wherein the RotorAhead flag is cleared so that when control is again passed to step 65, control will pass to step 75 where the rotor will be advanced. Importantly, control having been passed to step 70 from step 65 indicates that although the rotor was to be advanced because of the 1Hz Interrupt, since the rotor was already previously forced ahead one 180° rotation it is actually now at the correct position and the analog displayed time is correct.

On the other hand, if it is determined at step 65 that the analog time is correct (but there is a signal to rotate the rotor), then control does properly pass to step 75 where the rotor is advanced 180°. Control then passes to step 80 wherein it is determined whether the rotor is in the "bad" orientation, and if so, control passes to step 85 wherein the AdvanceRotor flag is again set so that at the next 32Hz Interrupt, the rotor will be advanced 180°.

It can thus be seen that the present invention provide a method for more accurately taking directional heading readings in an electronic device that includes a compass mode, such as in timepieces in general and watches in particular, that includes one or more stepper motors. Moreover, the present invention achieves the foregoing all while displaying them to a user, such as on an LCD display. Still further, the present invention provides and displays such directional heading readings while continuously maintaining and displaying at least essentially accurate timekeeping, and further provides a methodology to ensure that accurate timekeeping is returned to the analog display component of the device.

It will thus be seen that the objects set forth above, among those made apparent from the preceding description, are efficiently attained and, since certain changes may be made in the above constructions without departing from the spirit and scope of the invention, it is intended that all matter contained in the above description or shown in the accompanying drawings shall be interpreted as illustrative and not in a limiting sense.

Finally, it should be well appreciated that the present invention is well suited for a wide variety of electronic devices. Therefore, while the present disclosure provides its preferred embodiment as being a timepiece in general and a watch in particular, the invention should not be deemed to be so limited. That is, it should be clear that any electronic device that could utilize the present invention is intended to be covered hereby.

## Claims

1. In an electronic device, a method of measuring an external field and displaying indicia related to the measurement, wherein the electronic device generates a first internal field and at least one second internal field, the method comprising the step of:
measuring the external field when the electronic device is generating the first internal field;
wherein the electronic device comprises a plurality of stepping motors (18) at least one of which being for displaying time, each stepping motor (18) having a rotor (19) **characterised in that** the rotors (19) of the stepping motors (18) generate the first internal field and the at least one second internal field of the electronic device and the method includes the step of:
only displaying indicia related to measurements taken while the electronic device is generating the first internal field.

2. The method as claimed in claim 1, including the step of:
calibrating the electronic device by measuring or determining the first internal field, wherein the measured or determined first internal field is offset from the measured external field prior to displaying indicia related to the measured external field.

3. The method as claimed in claim 1, wherein the method comprises the steps of:
determining whether the rotors (19) are in their first orientations for generating the first internal field before measuring the external field and if so, measuring the external field; and
if not, causing the rotors (19) to rotate into their first orientations for generating the frist internal field prior to measuring the external field.

4. The method as claimed in claim 3, wherein the rotors (19) are rotatable from their first orientations to their second orientations in a predetermined period and are further rotatable from their second orientations to their first orientations in the predetermined period, wherein the method comprises the steps of:
causing the rotors (19) to be rotated from their second orientations into their first orientations in a period that is less than the predetermined period.

5. The method as claimed in claim 4, including the steps of:
determining whether the rotors (19) were caused to be rotated from the second orientation into the first orientation in the period that is less than the predetermined period; and
if so:
not rotating the rotors (19) until the next predetermined period.

6. The method as claimed in claim 5, wherein the predetermined period is at least essentially one second.

7. An electronic device for measuring an external field and displaying indicia related to the measurement, the electronic device comprising:
means for generating a first internal field and at least a second internal field of the electronic device; and
means (40) for measuring the external field when the electronic device is generating the first internal field
the electronic device further comprising a plurality of stepping motors (18) at least one of which being for displaying time, each stepping motor (18) having a rotor (19) **characterised in that** the rotors (19) of the stepping motors (18) are adapted to generate said first internal field and the at least one second internal field of the electronic device; and **in that** the device further comprises
means (40) adapted to only displaying indicia related to measurements of an external field taken while the electronic device is generating the first internal field.

8. The electronic device as claimed in claim 7, comprising:
means for calibrating the electronic device by measuring or determining the first internal field, wherein the measured or determined first internal field is offset from the measured external field prior to displaying indicia related to the measured external field.

9. The electronic device as claimed in claim 7, wherein the means for generating the first internal field comprises the rotors (19) of the stepping motors (18) being in their first orientations, and wherein the means for generating the at least second internal field is generated by at least one of the rotors (19) of the stepping motors (18) being in a second orientation, wherein the electronic device comprises:
means for determining whether the rotors (19) are in their first orientations before measuring the external field and if so, for measuring the external field; and if not, for causing the rotors (19) to rotate into their first orientations prior to measuring the external field.

10. The electronic device as claimed in claim 9, wherein the rotors (19) are rotatable from their first orientations to their second orientations in a predetermined period and are further rotatable from their second orientations to their first orientations in the predetermined period, wherein the electronic device causes the rotors (19) to be rotated from their second orientations into their first orientations in a period that is less than the predetermined period.

11. The electronic device as claimed in claim 10, comprising:
means for determining whether the rotors (19) were caused to be rotated from their second orientations into their first orientations in the period that is less than the predetermined period; and if so, for inhibiting rotating of the rotors (19) until the next predetermined period.

12. The electronic device as claimed in claim 7, wherein the electronic device is a timepiece and the external field is a magnetic field.

13. The electronic device as claimed in claim 11, wherein the electronic device is a timepiece and the external field is a magnetic field.

14. The electronic device as claimed in claim 9, including an LCD for displaying indicia related to the measurement, and wherein the stepping motor is operatively coupled to display hands for displaying time information.

## Patentansprüche

1. Verfahren in einem elektronischen Gerät zur Messung eines externen Felds und zur Anzeige von Werten bezüglich der Messung, wobei das elektronische Gerät ein erstes internes Feld und mindestens ein zweites internes Feld erzeugt, wobei das Verfahren folgenden Schritt umfasst:
Messen des externen Felds, wenn das elektronische Gerät das erste interne Feld erzeugt;
wobei das elektronische Gerät eine Vielzahl von Schrittmotoren (18) umfasst, wobei mindestens einer davon die Uhrzeit anzeigt, wobei jeder Schrittmotor (18) einen Rotor (19) aufweist, **dadurch gekennzeichnet, dass** die Rotoren (19) der Schrittmotoren (18) das erste interne Feld und das mindestens eine zweite interne Feld des elektronischen Geräts erzeugen und das Verfahren folgenden Schritt umfasst:
nur Anzeigen von Werten bezüglich der Messungen, die genommen wurden, während das elektronische Gerät das erste interne Feld erzeugt.

2. Verfahren nach Anspruch 1, das folgenden Schritt umfasst:
Kalibrieren des elektronischen Geräts durch Messen oder Ermitteln des ersten internen Felds, wobei das gemessene oder ermittelte erste interne Feld mit dem gemessenen externen Feld verrechnet wird, bevor Werte bezüglich des gemessenen externen Felds angezeigt werden.

3. Verfahren nach Anspruch 1, wobei das Verfahren folgende Schritte umfasst:
Ermitteln, ob sich die Rotoren (19) in ihren ersten Ausrichtungen zur Erzeugung des ersten internen Felds befinden, bevor das externe Feld gemessen wird, und wenn ja, Messen des externen Felds; und
wenn nicht, Veranlassen, dass sich die Rotoren (19) in ihre ersten Ausrichtungen drehen, um das erste interne Feld zu erzeugen, bevor das externe Feld gemessen wird.

4. Verfahren nach Anspruch 3, wobei die Rotoren (19) in einem vorbestimmten Zeitraum von ihren ersten Ausrichtungen in ihre zweiten Ausrichtungen drehbar sind und des Weiteren in dem vorbestimmten Zeitraum von ihren zweiten Ausrichtungen in ihre ersten Ausrichtungen drehbar sind, wobei das Verfahren folgende Schritte umfasst:
Veranlassen, dass sich die Rotoren (19) in einem Zeitraum, der geringer ist als der vorbestimmte Zeitraum, von ihren zweiten Ausrichtungen in ihre ersten Ausrichtungen drehen.

5. Verfahren nach Anspruch 4, das folgende Schritte umfasst:
Ermitteln, ob die Rotoren (19) veranlasst wurden, sich in dem Zeitraum, der geringer ist als der vorbestimmte Zeitraum, von der zweiten Ausrichtung in die erste Ausrichtung zu drehen; und
wenn ja:
bis zum nächsten vorbestimmten Zeitraum keine Drehung der Rotoren (19) vornehmen.

6. Verfahren nach Anspruch 5, wobei der vorbestimmte Zeitraum im Wesentlichen mindestens eine Sekunde beträgt.

7. Elektronisches Gerät zur Messung eines externen Felds und zur Anzeige von Werten bezüglich der Messung, wobei das elektronische Gerät Folgendes umfasst:
Mittel zum Erzeugen eines ersten internen Felds und mindestens eines zweiten internen Felds des elektronischen Geräts; und
Mittel (40) zum Messen des externen Felds, wenn das elektronische Gerät das erste interne Feld erzeugt;
wobei das elektronische Gerät des Weiteren Folgendes umfasst:
eine Vielzahl von Schrittmotoren (18), wobei mindestens einer davon die Uhrzeit anzeigt, wobei jeder Schrittmotor (18) einen Rotor (19) aufweist, **dadurch gekennzeichnet, dass** die Rotoren (19) der Schrittmotoren (18) dafür ausgelegt sind, das erste interne Feld und das mindestens eine zweite interne Feld des elektronischen Geräts zu erzeugen und das Gerät des Weiteren Folgendes umfasst:
Mittel (40), die dafür ausgelegt sind, nur Werte bezüglich der Messungen eines externen Felds anzuzeigen, die genommen wurden, während das elektronische Gerät das erste interne Feld erzeugt.

8. Elektronisches Gerät nach Anspruch 7, das Folgendes umfasst:
Mittel zum Kalibrieren des elektronischen Geräts durch Messen oder Ermitteln des ersten internen Felds, wobei das gemessene oder ermittelte erste interne Feld mit dem gemessenen externen Feld verrechnet wird, bevor Werte bezüglich des gemessenen externen Felds angezeigt werden.

9. Elektronisches Gerät nach Anspruch 7, wobei das Mittel zur Erzeugung des ersten internen Felds umfasst, dass sich die Rotoren (19) der Schrittmotoren (18) in ihren ersten Ausrichtungen befinden und wobei das Mittel zur Erzeugung des mindestens zweiten internen Felds **dadurch** erzeugt wird, dass sich mindestens einer der Rotoren (19) der Schrittmotoren (18) in einer zweiten Ausrichtung befindet, wobei das elektronische Gerät Folgendes umfasst:
Mittel zum Ermitteln, ob sich die Rotoren (19) in ihren ersten Ausrichtungen befinden, bevor das externe Feld gemessen wird, und wenn ja, Messen des externen Felds; und wenn nicht, Veranlassen, dass sich die Rotoren (19) in ihre ersten Ausrichtungen drehen, bevor das externe Feld gemessen wird.

10. Elektronisches Gerät nach Anspruch 9, wobei die Rotoren (19) in einem vorbestimmten Zeitraum von ihren ersten Ausrichtungen in ihre zweiten Ausrichtungen drehbar sind und des Weiteren in dem vorbestimmten Zeitraum von ihren zweiten Ausrichtungen in ihre ersten Ausrichtungen drehbar sind, wobei das elektronische Gerät die Rotoren (19) veranlasst, sich in einem Zeitraum, der geringer ist als der vorbestimmte Zeitraum, von ihren zweiten Ausrichtungen in ihre ersten Ausrichtungen drehen.

11. Elektronisches Gerät nach Anspruch 10, das Folgendes umfasst:
Mittel zum Ermitteln, ob die Rotoren (19) veranlasst wurden, sich in dem Zeitraum, der geringer ist als der vorbestimmte Zeitraum, von ihren zweiten Ausrichtungen in ihre erste Ausrichtungen zu drehen; und wenn ja, bis zum nächsten vorbestimmten Zeitraum eine Drehung der Rotoren (19) zu verhindern.

12. Elektronisches Gerät nach Anspruch 7, wobei das elektronische Gerät eine Uhr ist und das externe Feld ein Magnetfeld ist.

13. Elektronisches Gerät nach Anspruch 11, wobei das elektronische Gerät eine Uhr ist und das externe Feld ein Magnetfeld ist.

14. Elektronisches Gerät nach Anspruch 9, das eine LCD-Anzeige zur Anzeige von Werten bezüglich der Messung umfasst und wobei der Schrittmotor betriebsfähig mit Uhrzeigern gekoppelt ist, um Zeitinformationen anzuzeigen.

## Revendications

1. Dans un dispositif électronique, un procédé pour mesurer un champ externe et afficher des indices relatifs aux mesures, où le dispositif électronique génère un premier champ interne et au moins un deuxième champ interne, le procédé comportant l'étape visant à :
mesurer le champ externe quand le dispositif électronique génère le premier champ interne ;
où le dispositif électronique comporte une pluralité de moteurs pas-à-pas (18) parmi lesquels un au moins sert à afficher l'heure, chaque moteur pas-à-pas (18) ayant un rotor (19) **caractérisé en ce que** les rotors (19) des moteurs pas-à-pas (18) génèrent le premier champ interne et l'au moins un deuxième champ interne du dispositif électronique et le procédé comprend l'étape visant à :
afficher seulement les indices relatifs aux mesures prises pendant que le dispositif électronique génère le premier champ interne.

2. Le procédé tel que revendiqué dans la revendication 1, comprenant l'étape visant à :
calibrer le dispositif électronique en mesurant ou déterminant le premier champ interne, où le premier champ interne mesuré ou déterminé est déduit du champ externe mesuré avant d'afficher les indices relatifs au champ externe mesuré.

3. Le procédé tel que revendiqué dans la revendication 1, où le procédé comporte les étapes visant à :
déterminer si les rotors (19) sont dans leurs premières orientations pour générer le premier champ interne avant de mesurer le champ externe et si c'est le cas, mesurer le champ externe ; et
sinon, amener les rotors (19) à entrer en rotation dans leurs premières orientations pour générer le premier champ interne avant de mesurer le champ externe.

4. Le procédé tel que revendiqué dans la revendication 3, où les rotors (19) peuvent entrer en rotation de leurs premières orientations dans leurs deuxièmes orientations dans une période prédéterminée et peuvent de plus entrer en rotation de leurs deuxièmes orientations dans leurs premières orientations dans la période prédéterminée, où le procédé comporte les étapes visant à :
amener les rotors (19) à entrer en rotation de leurs deuxièmes orientations dans leurs premières orientations dans une période qui est inférieure à la période prédéterminée.

5. Le procédé tel que revendiqué dans la revendication 4, comprenant les étapes visant à :
déterminer si les rotors (19) ont été amenés à entrer en rotation de leur deuxième orientation dans leur première orientation dans la période qui est inférieure à la période prédéterminée ; et
si c'est le cas :
ne pas faire entrer en rotation les rotors (19) jusqu'à la période prédéterminée suivante.

6. Le procédé tel que revendiqué dans la revendication 5, où la période prédéterminée est au moins essentiellement d'une seconde.

7. Un dispositif électronique pour mesurer un champ externe et afficher des indices relatifs à la mesure, le dispositif électronique comportant :
un moyen pour générer un premier champ interne et au moins un deuxième champ interne du dispositif électronique ; et
un moyen (40) pour mesurer le champ externe quand le dispositif électronique génère le premier champ interne
le dispositif électronique comportant de plus :
une pluralité de moteurs pas-à-pas (18) parmi lesquels un au moins sert à afficher l'heure, chaque moteur pas-à-pas (18) ayant un rotor (19) **caractérisé en ce que** les rotors (19) des moteurs pas-à-pas (18) sont adaptés pour générer ledit premier champ interne et l'au moins un deuxième champ interne du dispositif électronique ; et **en ce que** le dispositif comporte de plus
un moyen (40) adapté pour afficher seulement les indices relatifs aux mesures d'un champ externe prises pendant que le dispositif électronique génère le premier champ interne.

8. Le dispositif électronique tel que revendiqué dans la revendication 7, comportant :
un moyen pour calibrer le dispositif électronique en mesurant ou déterminant le premier champ interne, où le premier champ interne mesuré ou déterminé est déduit du champ externe mesuré avant d'afficher les indices relatifs au champ externe mesuré.

9. Le dispositif électronique tel que revendiqué dans la revendication 7, où le moyen pour générer le premier champ interne comporte les rotors (19) des moteurs pas-à-pas (18) étant dans leurs premières orientations, et où le moyen pour générer l'au moins un deuxième champ interne est généré par au moins un des rotors (19) des moteurs pas-à-pas (18) étant dans une deuxième orientation, où le dispositif électronique comporte :
un moyen pour déterminer si les rotors (19) sont dans leurs premières orientations avant de mesurer le champ externe et si c'est le cas, pour mesurer le champ externe ; et si ce n'est pas le cas, pour amener les rotors (19) à entrer en rotation dans leurs premières orientations avant de mesurer le champ externe.

10. Le dispositif électronique tel que revendiqué dans la revendication 9, où les rotors (19) peuvent entrer en rotation de leurs premières orientations dans leurs deuxièmes orientations dans une période prédéterminée et peuvent de plus entrer en rotation de leurs deuxièmes orientations dans leurs premières orientations dans la période prédéterminée, où le dispositif électronique amène les rotors (19) à entrer en rotation de leurs deuxièmes orientations dans leurs premières orientations dans une période qui est inférieure à la période prédéterminée.

11. Le dispositif électronique tel que revendiqué dans la revendication 10, comportant :
un moyen pour déterminer si les rotors (19) ont été amenés à entrer en rotation de leurs deuxièmes orientations dans leurs premières orientations dans la période qui est inférieure à la période prédéterminée ; et si c'est le cas, pour empêcher la rotation des rotors (19) jusqu'à la période prédéterminée suivante.

12. Le dispositif électronique tel que revendiqué dans la revendication 7, où le dispositif électronique est une pièce d'horlogerie et le champ externe est un champ magnétique.

13. Le dispositif électronique tel que revendiqué dans la revendication 11, où le dispositif électronique est une pièce d'horlogerie et le champ externe est un champ magnétique.

14. Le dispositif électronique tel que revendiqué dans la revendication 9, comprenant un affichage à cristaux liquides pour afficher les indices relatifs à la mesure, et où le moteur pas-à-pas est couplé de façon opérante à des aiguilles d'affichage pour afficher les informations d'heure.
